# FASCICULE DE BREVET EUROPEEN

(11) **EP 0 390 715 B1**
(45) Date de publication et mention de la délivrance du brevet: **20.01.1993**
(21) Numéro de dépôt: 90460017.8
(22) Date de dépôt: 26.03.1990
(51) Int. Cl.: F16L 37/56

(54) **Connecteur fluidique multiple**
Fluidischer Mehrfachverbinder
Multiple fluidic connection

(30) Priorité: 29.03.1989 FR 8904342
(43) Date de publication de la demande: 03.10.1990
(73) Titulaire: SOCIETE D'ETUDES ET D'INNOVATION DANS LE MATERIEL AGRICOLE (SEIMA), F-35690 Acigne (FR)
(72) Inventeur: Mailleux, Loîc André, F-35000 Rennes (FR)
(74) Mandataire: Martin, Jean-Jacques

(56) Documents cités:
- DE-A- 1 256 006
- DE-A- 2 011 361
- GB-A- 2 077 872

## Description

La présente invention concerne un connecteur fluidique multiple.

Dans de nombreux domaines de l'industrie il est nécessaire de connecter de manière étanche un équipement à des sources distributrices de fluide sous pression, liquide hydraulique ou air comprimé notamment, ceci au moyen d'une pluralité de connections distinctes.

C'est le cas en particulier de la liaison hydraulique d'un tracteur agricole avec un dispositif chargeur à commande hydraulique destiné à être monté, de manière amovible, sur le tracteur.

Des dispositifs chargeurs de ce type sont décrits par exemple dans les documents de brevet FR-A-2 501 179, FR-A-2 542 298 et FR-A-2 596 378. Ces dispositifs sont équipés d'un certain nombre de vérins hydrauliques agencés pour réaliser différents déplacements de l'outil porté par le chargeur, par exemple une benne, une griffe, une fourche ou une lame. Ces différents mouvements sont pilotés par un opérateur situé sur le tracteur, qui commande à l'aide de manettes des valves distributrices appropriées, celles-ci alimentant chacune un vérin en liquide hydraulique par l'intermédiaire de conduits souples.

La jonction hydraulique entre la partie de chaque conduit située sur le tracteur et la partie portée par le chargeur est généralement assurée au moyen d'un connecteur qui est composé de deux éléments principaux à savoir un organe mâle de forme tubulaire muni d'un clapet d'obturation automatique et un organe femelle, également de forme tubulaire et muni aussi d'un clapet d'obturation automatique. L'organe femelle est destiné à être emboîté de manière étanche sur l'organe mâle par enfoncement axial ; par suite de cet enfoncement, les deux obturateurs se trouvent appliqués l'un contre l'autre, ce qui provoque leur décollement de leur siège et assure la connexion hydraulique entre les deux organes.

Dans les connecteurs perfectionnés, l'organe femelle porte un troisième élément fonctionnel, en l'occurence un manchon de verrouillage coulissant qui est adapté pour solliciter radialement vers l'intérieur, au moyen de sa paroi interne, une série de billes qui sont réparties circonférentiellement dans l'élément femelle. Cette sollicitation a pour effet d'appliquer les billes dans une gorge ménagée sur l'élément mâle et ainsi d'assurer la solidarisation des deux organes dans le sens axial. Le manchon est normalement déplacé automatiquement dans sa position de verrouillage par un ressort. Si on déplace légèrement le manchon à l'encontre de ce ressort, on fait venir en vis-à-vis des billes une partie de paroi de plus grand diamètre, ce qui autorise leur escamotage radial vers l'extérieur et réalise donc le déverrouillage des deux organes. Le même déplacement du manchon doit être opéré avant l'emboîtement des deux organes, afin de permettre l'enfoncement de la partie mâle dans la partie femelle grâce à l'escamotage des billes ; après enfoncement complet, le manchon est relaché, ce qui provoque le verrouillage automatique des deux organes, les billes venant se loger dans la gorge de l'élément mâle.

De manière traditionnelle, les connecteurs qui équipent l'ensemble tracteur-chargeur sont indépendants. Chaque connexion est donc faite individuellement à chaque fois que le chargeur est monté sur le tracteur et inversement chaque connexion est défaite lorsque le chargeur est enlevé, ce qui est long et fastidieux.

Bien qu'il soit généralement prévu sur les organes complémentaires mâle et femelle associés des moyens de reconnaissance tels que des repères colorés ou des détrompeurs, ces dispositifs connus sont sources d'erreurs fréquentes et causes de disfonctionnements, lesquels peuvent conduire à des accidents graves résultant de surpressions.

De plus, l'accouplement devient très difficile, voire impossible par la seule force de l'opérateur, lorsqu'une pression résiduelle règne dans l'une des parties de conduits à connecter, situation relativement fréquente dans la pratique, par exemple par suite de l'affaissement de l'outil en position de parking ou de la dilatation du liquide hydraulique par exposition prolongée au soleil.

Enfin, les différents organes de connexion sont en permanence exposés à la poussière et autres salissures, ce qui est une difficulté supplémentaire au moment de la connexion.

Dans le document FR-A-2 276 768, il est décrit un raccord multiple pour tuyau souple qui est composé de deux plaques pouvant être serrées, de manière amovible, l'une contre l'autre ; l'une des plaques porte une pluralité d'éléments de jonction tubulaires femelles, et l'autre une pluralité d'éléments mâles complémentaires, les deux catégories d'éléments coïncidents, en nombre et en position, de sorte que l'ensemble peut être enfiché de manière étanche. Il est prévu que l'accouplement des deux plaques puisse se faire par une fermeture à déclic, excentrique ou à levier.

Ce dispositif permet donc d'accoupler et de désaccoupler simultanément, et sans risque d'erreurs, un grand nombre de conduits fluidiques. Il n'est toutefois pas adapté pour réaliser la connexion d'organes mâles et femelles du type évoqué plus haut, dont l'élément femelle est muni d'un manchon de verrouillage coulissant. En effet, ce dernier se trouvant normalement placé en position verrouillée, il faudrait pour que l'accouplement des deux plaques soit possible faire coulisser préalablement et simultanément l'ensemble des manchons dans le sens du déverrouillage, puis les relâcher après enfichage, ce qui n'est pas possible manuellement.

Le document DE-A-2 011 361 a pour objet un connecteur fluidique multiple qui utilise des connecteurs du type évoqué plus haut, composés de trois éléments, à savoir un organe mâle, un organe femelle et un manchon de verrouillage monté coulissant sur l'organe femelle.

Ce dispositif est constitué de trois plaques horizontales superposées qui portent chacune une catégorie de ces trois éléments ; ceux-ci sont disposés de manière coïncidente (en alignement) sur la plaque qui les porte, de sorte que la connexion de l'ensemble peut se faire en une seule opération.

Dans ce dispositif, la plaque inférieure - qui porte les organes femelles - consiste en un socle fixe, tandis que la plaque supérieure - qui porte les organes mâles - est portée par un coulisseau guidé en translation verticale sur des colonnes fixes (portées par un bâti). La plaque intermédiaire porte les manchons de verrouillage. Le déplacement des différentes plaques est réalisé au moyen d'une paire de disques servant de cames, lesquels sont reliés par un axe commun actionné par un levier et sont articulés sur des supports solidaires du socle. Chaque disque agit, d'une part par sa paroi externe excentrée sur la plaque supérieure, d'autre part au moyen d'une rampe interne sur le coulisseau, ceci par l'intermédiaire d'un têton latéral solidaire de ce dernier. En principe, les disques assurent le déplacement relatifs, selon un séquencement déterminé, des trois plaques afin de réaliser les différentes étapes de verrouillage, de connexion et de verrouillage de l'ensemble.

Un tel dispositif n'est cependant pas adapté à certaines applications dans lesquelles l'une des plaques est portée par un ensemble distinct de celui portant les deux autres, et ces deux ensembles étant séparés et éloignés l'un de l'autre après déconnexion - comme c'est le cas pour l'application à un chargeur hydraulique amovible équipant un tracteur agricole -. Ce dispositif est conçu au contraire pour être installé à demeure en un poste fixe, les plaques supérieure et inférieure étant maintenues et/ou guidées par des moyens extérieurs fixes pour se trouver en permanence dans l'alignement l'une de l'autre.

Par ailleurs, le dispositif selon DE-A-2 011 361 présente nécessairement un encombrement important, dû essentiellement à ces moyens de guidage extérieurs et est donc mal adapté pour équiper des installations où la compacité est recherchée, notamment des installations mobiles. Il ne semble pas manipulable par une personne seule, en particulier pour le déverrouillage.

De plus, dans ce dispositif, les organes de connexion sont directement exposés au milieu ambiant et à la pollution, notamment à la poussière ; il en résulte un risque d'encrassement des circuits hydrauliques, et de détérioration prématurée des organes traversés par les circuits, pompes et valves notamment.

Au surplus, en cas de salissure, une défaillance des ressorts de verrouillage est à craindre. Dans ce cas, rien ne garantit que les manchons viennent se positionner correctement et assurent le verrouillage. En cas de non-verrouillage de l'un ou plusieurs organes connecteurs, le dispositif risque d'être détérioré sous l'effet de la pression hydraulique régnant dans les organes non verrouillés.

Enfin, comme cela est bien connu, il se produit inévitablement, à chaque connexion ou déconnexion, des fuites, voire des projections d'une certaine quantité de fluide hydraulique qui sont sources de salissure et/ou de danger pour l'utilisateur.

L'invention vise à résoudre ces différents problèmes en proposant un connecteur fluidique multiple du type général dont il vient d'être fait état, ce connecteur permettant d'éliminer tout risque d'erreur de branchement, tout en étant robuste, facile et rapide à utiliser même pour des personnes peu expertes, tant pour la connexion que la déconnexion, et même dans le cas où il règne dans les conduits des pressions résiduelles élevées ou inégales.

Un autre objectif de l'invention est de proposer un connecteur compact et pouvant équiper des installations variées et des engins mobiles, en particulier des tracteurs agricoles équipés d'un chargeur amovible.

Un autre objectif de l'invention est de proposer un connecteur de prix de revient raisonnable.

Un autre objectif est de proposer un connecteur dans lequel les différents organes de connexion se trouvent naturellement à l'abri du milieu extérieur, notamment des poussières et des salissures, et dans lequel, inversement, le milieu extérieur se trouve à l'abri des écoulements et projections de fluide hydraulique.

Le connecteur fluidique multiple qui fait l'objet de l'invention comprend une pluralité d'organes de connexion femelles, de forme générale tubulaire, aptes à être emboîtés chacun de manière étanche sur un organe de connexion mâle complémentaire, également de forme générale tubulaire, chaque organe femelle portant un manchon de verrouillage coaxial coulissant, l'ensemble desdits organes de connexion femelles, desdits manchons de verrouillage et desdits organes de connexion mâles étant montés, en des emplacements coïncidents, respectivement sur une première plaque, une seconde plaque, et une troisième plaque, de telle façon que l'axe de chaque organe de connexion et de chaque manchon se trouve dirigé perpendiculairement à la plaque sur laquelle il est monté, ces trois plaques pouvant être susperposées en vue de la connexion fluidique simultanée de chaque organe mâle avec l'organe femelle associé, et lesdites première et troisième plaques (1,3) possèdant des bords rabattus, ce connecteur comportant un dispositif à came, à commande manuelle, adapté pour réaliser séquentiellement, d'une part le déplacement relatif desdites première et seconde plaques afin d'actionner lesdits manchons de verrouillage, d'autre part le déplacement relatif desdites première et troisième plaques afin de provoquer l'emboîtement ou le désemboîtement desdits organes de connexion mâles et femelles, caractérisé par le fait que tous les bords desdites première et troisième plaques sont rabattus à angle droit, donnant ainsi aux plaques la forme de boîtiers emboîtables l'un dans l'autre de manière à assurer leur guidage mutuel au cours de leur engagement et de leur déplacement relatifs, et à isoler du milieu extérieur l'ensemble des organes de connexion.

Par ailleurs, selon un certain nombre de caractéristiques avantageuses, mais non limitatives de l'invention :
- lesdites première et seconde plaques sont solidaires l'une de l'autre et constituent un ensemble séparable de ladite troisième plaque, le dispositif à came comportant des moyens qui permettent leur engagement mutuel en vue de la connexion ;
- l'ensemble desdites plaques a un contour sensiblement rectangulaire, tandis que le dispositif à came comprend une paire de cames plates identiques et parallèles, dont les grandes faces sont disposées perpendiculairement par rapport à la première plaque et sont articulées sur des tourillons coaxiaux montés sur deux bords opposés de cette première plaque, ces deux cames étant reliées l'une à l'autre par une tige de liaison et actionnées par un organe de manoeuvre commun tel qu'un levier démultiplicateur ;
- chacune desdites cames est pourvue d'une première piste coopérant avec un premier organe suiveur tel qu'un galet, cette piste présentant une portion principale de contour en arc de cercle, centré sur ledit tourillon, et deux gorges d'extrémité semi-cylindriques aptes à recevoir ledit organe suiveur, la distance séparant le fond de ces gorges du centre du tourillon étant plus petite que le rayon de la portion en arc de cercle, la différence entre ces deux valeurs correspondant sensiblement à la course de verrouillage-déverrouillage du manchon coulissant ;
- chacune des cames est pouvue d'une rainure apte à recevoir un second organe suiveur, tel qu'un galet, cette rainure ayant une forme en arc de spirale centré sur le tourillon, et débouchant à l'extérieur par une ouverture qui autorise le passage de l'organe suiveur, l'un des bords de cette rainure servant à rapprocher l'une de l'autre lesdites première et troisième plaque en vue de leur connexion tandis que l'autre sert à les écarter en vue de leur déconnexion ;
- il est pourvu d'au moins un jeu d'organes additionnels de connexion non fluidique, par exemple électrique, portés par lesdites première et troisième plaques ;
- il est destiné à assurer la connexion hydraulique entre un tracteur agricole et un dispositif chargeur à commande hydraulique.

D'autres caractéristiques et avantages de l'invention apparaîtront de la description et des dessins annexés qui en présentent un mode de réalisation préférentiel.

Sur ces dessins :
- la figure 1 est une vue schématique éclatée et en perspective, avec arrachements, du connecteur ;
- la figure 2 est une vue schématique du connecteur coupé par un plan vertical médian ;
- la figure 3 est une vue en coupe axiale de l'un des éléments de connexion ;
- les figures 4 et 5 sont des demi-vues schématiques, correspondant à la figure 3 mais à échelle légèrement agrandie, destinées à illustrer les différentes étapes d'une opération de connexion ;
- les figures 6, 7 et 8 sont des vues schématiques montrant l'une des cames équipant le connecteur, respectivement avant connexion, en cours de connexion et après connexion ;
- la figure 6a représente une variante de cette came, à plus petite échelle.

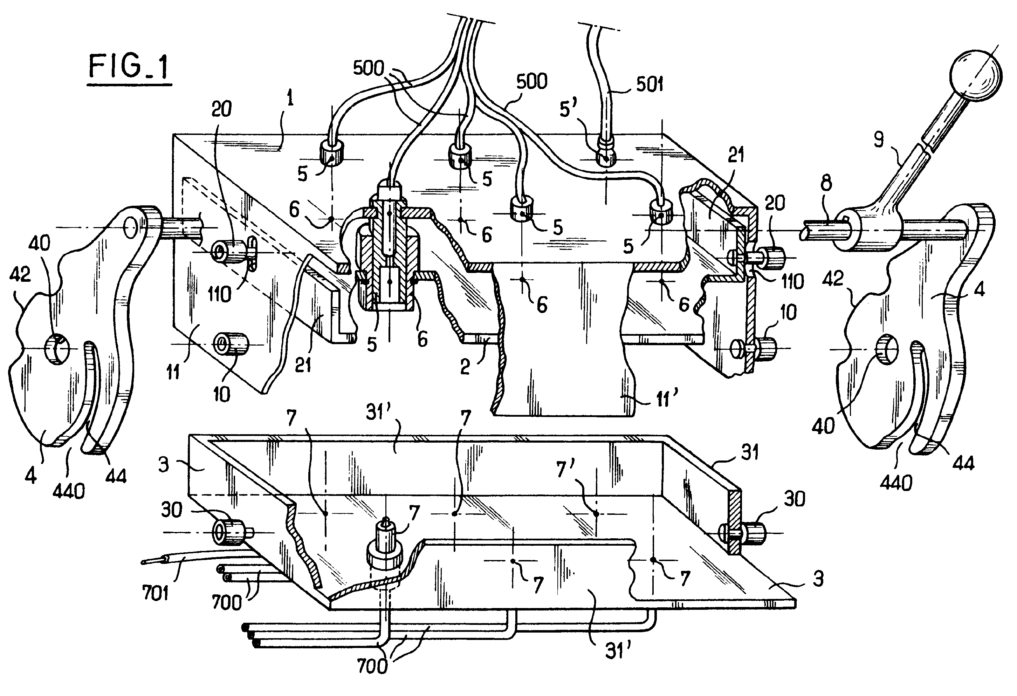

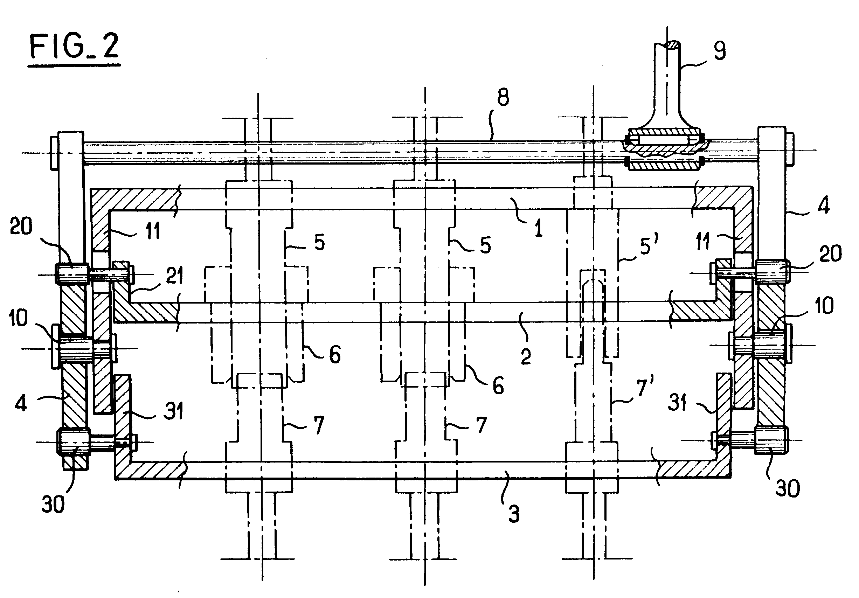

Le dispositif représenté sur les figures 1 et 2 est essentiellement composé de trois plaques rectangulaires disposées horizontalement en position superposée. La plaque supérieure 1 est pourvue de rebords latéraux 11 et de rebords avant et arrière 11′, ce qui lui donne l'allure d'un boîtier ouvert vers le bas. De manière similaire, la plaque inférieure 3 possède des rebords verticaux latéraux 31 et avant et arrière 31′ qui lui donnent l'allure d'un boîtier ouvert vers le haut. Comme on le voit plus particulièrement à la figure 2, les dimensions de la plaque 3 sont légèrement plus petites que celles de la plaque 1, de sorte que les rebords 31, 31′ peuvent pénétrer avec un faible jeu à l'intérieur des rebords 11, 11′, comme un fond de boîte par rapport à un couvercle.

La plaque intermédiaire 2 possède deux rebords latéraux 21, qui s'inscrivent également avec un léger jeu entre les rebords 11.

Dans la plaque inférieure 3 sont montés plusieurs organes de connexion fluidique mâles 7 ; ce sont des organes de type connu, de forme générale tubulaire, dont les axes sont disposés perpendiculairement à la plaque 3. Ces organes seront décrits plus en détail plus loin.

A titre indicatif, les plaques rectangulaires ont une dimension de l'ordre de 150 x 200 mm.

Il est prévu dans l'exemple représenté cinq organes 7, dont un seul a été représenté à la figure 1 pour une meilleure clarté. Les organes de connexion mâles 7 sont alimentés en liquide hydraulique par des conduits 700, souples ou rigides, branchés à ces organes en-dessous de la plaque 3.

Il est également prévu un organe de branchement électrique 7′, par exemple une fiche mâle à deux contacteurs coaxiaux, alimentés par un câble électrique 701.

De manière similaire, la plaque supérieure 1 porte cinq organes de connexion fluidique femelles désignés par la référence 5, dont l'emplacement sur la plaque coïncide avec l'emplacement des organes mâles 7. De manière similaire, en correspondance avec le connecteur électrique mâle 7′, est monté dans la plaque 1 une fiche femelle 5′. On a désigné par les références 500, 501 respectivement les conduits fluidiques arrivant, par le dessus de la plaque 1, à chacun des organes femelles 5, et le câble électrique arrivant à la fiche femelle 5′ ; on notera que les conduits 500 sont des conduits souples.

Ce dispositif est pourvu d'une paire de cames plates et identiques 4. Chaque came 4 est disposée à proximité de l'un des rebords 11, parallèlement à ce rebord, c'est-à-dire verticalement. Chaque came est traversée par un trou central 40 qui sert à son montage sur un axe d'articulation, ou tourillon, 10 porté par ledit rebord 11. Des moyens de fixation appropriés, qui n'ont pas été représentés pour ne pas altérer la clarté de la figure, assurent le montage articulé de chaque came 4 sur le tourillon associé 10. Les deux cames identiques 4 sont reliées par une tige longitudinale 8 formant entretoise ; les extrémités de cette tige traversent des ouvertures prévues à cet effet dans chacune des cames, et des moyens de fixation appropriés sont également prévus à ce niveau.

Sur la tige 8, de préférence à proximité de l'une des deux cames 4 (sur la droite à la figure 1) est monté un levier de manoeuvre 9 ; ce dernier est immobilisé à la fois en translation, par exemple au moyen de circlips, et en rotation, par exemple au moyen d'une clavette, sur la tige 8 (voir figure 2).

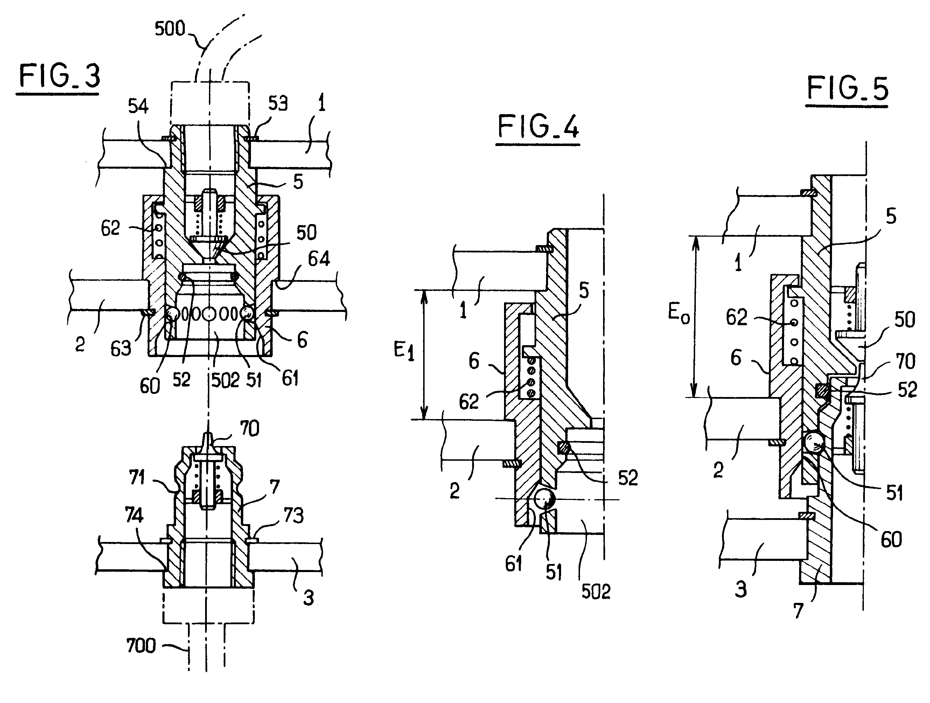

Chacun des organes femelles 5 portés par la plaque supérieure 1 est entouré d'un manchon de verrouillage 6 qui est solidaire de la plaque intermédiaire 2, comme on le verra en détail plus loin, en référence à la figure 3. Les rebords latéraux 21 de cette plaque intermédiaire 2 portent chacun un galet anti-friction 20 dont l'axe traverse le rebord 11 qui se trouve à proximité par une lumière 110 (ouverture allongée dans le sens vertical). Cette dernière autorise le mouvement relatif des deux plaques 1 et 2 en direction verticale, c'est-à-dire leur rapprochement ou leur éloignement, malgré la présence des galets 20. Les galets 20 sont des organes suiveurs adaptés pour coopérer avec une piste de came 42 prévue sur le dessus de chaque came 4, et dont le contour sera décrit plus loin.

De manière similaire, les rebords latéraux 31 de la plaque inférieure 3 portent des galets anti-friction 30 adaptés pour coopérer avec une rainure 44 ménagée dans la partie inférieure de la came 4 ; cette rainure 44 débouche vers le bas par une embouchure élargie 440.

On notera que les deux plaques 1 et 2 sont solidaires l'une de l'autre, et ne peuvent être normalement séparées en raison de la présence des cames 4 et des galets 20.

Au contraire, la plaque inférieure 3 est indépendante des deux plaques supérieures.

Dans l'application qui a été plus particulièrement visée lors de la conception de la présente invention, qui concerne la connexion hydraulique entre un tracteur agricole et un dispositif chargeur à commande hydraulique, la plaque inférieure 3 est fixée à demeure sur l'un des côtés du tracteur, légèrement à l'avant de la cabine de pilotage, tandis que l'ensemble constitué par les deux plaques 1 et 2, des cames 4 et des éléments de liaison et de manoeuvre 8, 9, est monté sur le chargeur, en un emplacement destiné à venir coiffer la plaque 3 lorsque le chargeur est mis en place sur le tracteur.

En nous référant à la figure 3, nous allons maintenant décrire en détail la structure et le fonctionnement de l'un des éléments de connexion 5-6-7 qui équipent le dispositif.

Sur cette figure, les éléments sont déconnectés.

L'organe femelle 5 est retenu dans une ouverture de la plaque 1 par un épaulement 54 et un circlips 53. De manière similaire, des épaulements 64, respectivement 74 et des circlips 63, respectivement 73, assurent la retenue du manchon 6 et de l'organe mâle 7 par rapport à leur plaque de montage 2, 3.

De manière bien connue, l'organe mâle 7 joue le rôle d'un clapet à fermeture automatique, comprenant un piston obturateur 70 qui est constamment solicité dans sa position d'obturation par un petit ressort. De manière similaire, l'organe femelle 5 possède un piston obturateur 50 qui est constamment appliqué contre son siège, en position d'obturation, par un petit ressort.

A la partie inférieure de 'l'organe femelle 5 sont ménagées une série d'ouvertures circulaires disposées à la périphérie de cet organe ; chacune de ces ouvertures reçoit une bille 51 dont le diamètre est légèrement supérieur à l'épaisseur de la paroi à ce niveau. Le manchon de verrouillage 6 est mobile en translation sur l'organe 5 qu'il entoure. Un ressort 62 tend constamment à faire descendre le manchon 6 par rapport à l'organe femelle 5, c'est-à-dire à écarter l'une de l'autre les deux plaques 1 et 2. Dans cette position, qui est représentée à la figure 3, la paroi intérieure 60 du manchon qui se trouve en vis-à-vis des billes 51 exerce sur celles-ci une force radiale dirigée vers l'intérieur, de sorte que lesdites billes font saillie à l'intérieur de la chambre 502 de l'organe femelle, chambre qui est destinée à recevoir par emboîtement l'élément mâle 7. On notera que cette chambre est garnie d'un joint d'étanchéité circulaire 52, de type connu.

Si on déplace, dans le sens du rapprochement des deux plaques 1 et 2, le manchon 6 par rapport à l'organe 5 en comprimant le ressort 62, une partie élargie 61 de la paroi intérieure du manchon vient en vis-a-vis des billes 51 comme cela est représenté à la figure 4, si bien que celles-ci sont libres de s'escamoter radialement vers l'extérieur. La position en hauteur de la série de billes 51 est déterminée de telle manière que ces billes puissent venir s'engager dans une gorge 71 ménagée à la périphérie de l'organe mâle 7, lorsque ce dernier est emboîté correctement et complètement dans l'organe femelle 6. Dans cette position, qui est représentée à la figure 5, le nez du piston 70 vient porter contre le piston 50, de sorte que ces deux pistons sont décollés de leur siège, dans une position de non obturation qui autorise le passage de fluide d'un organe à l'autre.

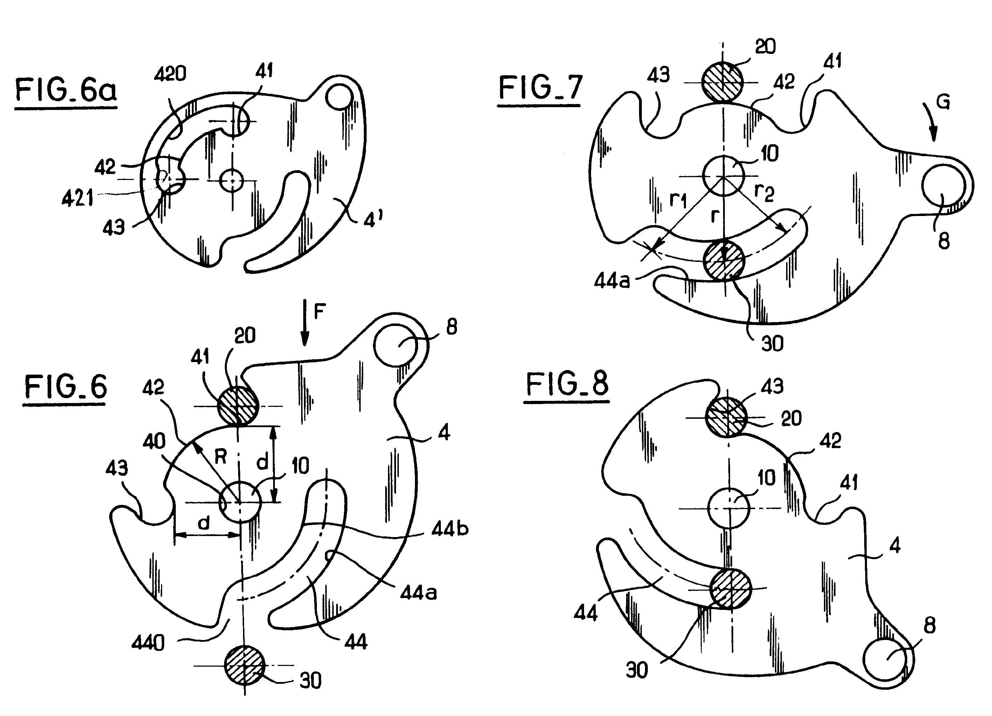

En référence aux figures 6 à 8, nous allons maintenant décrire la forme des cames 4.

La piste supérieure 42, destinée à coopérer avec le galet 20, présente une portion principale de contour en arc de cercle centrée sur le tourillon 10 ; on a désigné par R le rayon de cette portion, qui s'étend sur un quart de cercle environ. A chacune de ses extrémités, la portion en arc de cercle se raccorde à une gorge semi-circulaire 41, 43 ; on a désigné par la référence d la distance (identique) de chacun des fonds de gorge par rapport au centre du tourillon 10.

Selon une caractéristique importante, la différence R - d est sensiblement égale à la course de verrouillage-déverrouillage du manchon 6 par rapport à l'organe femelle 5, c'est-à-dire à la différence des écartements E0 et E1 des deux plaques 1, 2 selon que celles-ci se trouvent dans la position de la figure 5 ou dans la position de la figure 4.

La rainure de came 44 possède une largeur qui correspond sensiblement, au jeu près, au diamètre du galet suiveur 30. Cette rainure a un contour en forme de spirale, de préférence de spirale d'Archimède, la distance séparant le centre de la rainure du centre du tourillon 10 variant de manière proportionnelle à l'angle de rotation autour du tourillon. Cette distance r diminue lorsqu'on se déplace depuis l'embouchure 440 jusqu'au fond de la rainure. La rainure 44 s'étend également sur un secteur angulaire de l'ordre du quart de cercle, et on a désigné par les références 44a et 44b les deux parois opposées de cette rainure.

Nous allons maintenant expliquer de quelle manière le dispositif qui vient d'être décrit est utilisé pour connecter et déconnecter l'ensemble des organes mâles 7, 7′ et femelles 5, 5′, par exemple entre un tracteur agricole et un chargeur amovible à commande hydraulique.

Comme déjà dit plus haut, lorsque le chargeur est monté sur le tracteur, l'ensemble constitué par les plaques 1, 2, les cames 4 et le levier 9 est situé en un emplacement proche de la plaque 3 qui est portée par le tracteur. Cet ensemble possède une certaine liberté de déplacement, grâce à la flexibilité des conduits 500 et du câble 501.

L'opérateur place cet ensemble sur la plaque fixe 3, tandis que le levier 9 se trouve en position relevée, position qui est représentée à la figure 6. Dans cette position, les galets 20 se trouvent logés dans les gorges 41 des pistes de came 42, ce qui correspond à une position écartée des deux plaques 1 et 2, dans laquelle les billes de verrouillage 51 font saillie vers l'intérieur (position de la figure 5).

L'opérateur amène l'ensemble 1, 2 à l'aplomb de la plaque 3 et abaisse cet ensemble de la même manière qu'on place un couvercle sur une boîte (mouvement figuré par la flèche F à la figure 6).

Durant ce mouvement d'abaissement, les rebords 31, 31′ assurent un bon positionnement des deux parties, par coopération avec les rebords 11, 11′. A la fin de l'emboîtement des deux parties, les embouchures de came 440, ouvertes vers le bas, viennent coiffer les galets 30 portés par la plaque 3. A ce stade, l'ensemble 1, 2 repose sur la plaque 3, et est parfaitement positionné par rapport à celle-ci, mais sans qu'il y ait une quelconque connexion fluidique entre les organes mâles et femelles.

Pour effectuer la connexion, l'opérateur agit sur le levier 9 pour faire tourner les deux cames autour de leur axe d'articulation 10 (flèche G, figure 7).

Durant ce mouvement, les galets 20 quittent leur gorge 41 pour parcourir la partie de came circulaires 42, de sorte que l'ensemble des manchons de verrouillage se trouve relevé en comprimant les ressorts correspondants 62. Les billes 51 de l'ensemble des manchons se trouvent donc escamotées vers l'extérieur, dans une position favorable à l'emboîtement des organes mâles 7.

Dans le même temps, les galets 30 parcourent les pistes 44a des cames comme chaque piste 44a a un contour en spirale, qui se rapproche progressivement de l'axe 10, les deux plaques 1 et 3 sont progressivement rapprochées l'une de l'autre.

A la figure 7, on a désigné par les références r₁ et r₂ les distances correspondant à l'éloignement de la rainure 44 par rapport au centre de l'axe 10 ; ces valeurs sont choisies pour que la différence r₂ - r₁ soit sensiblement égale à la courbe nécessaire à l'emboîtement de la partie mâle dans la partie femelle, à partir de la position d'engagement initiale.

Cet emboîtement se fait librement, puisque les billes 51 sont escamotées. A la fin de l'emboîtement, les galets 20 viennent en vis-à-vis des secondes gorges 43, de sorte que, sous l'action des ressorts 62, la plaque 2 s'écarte à nouveau de la plaque 1, provoquant le blocage des manchons 5 sur les organes mâles 7, les billes de verrouillage 51 venant se loger dans les gorges 71. L'ensemble des connections se trouve donc simultanément réalisé (position des figures 5 et 8). A la fin de l'emboîtement le "nez" de chaque piston obturateur 70 a repoussé le piston 50 associé, réalisant la connexion fluidique souhaitée.

Dans le même temps le rapprochement des plaques 3 et 1 a provoqué l'enfichage du connecteur électrique mâle 7′ dans le connecteur femelle 5′ ; pour ce qui concerne cette connexion électrique, la plaque intermédiaire 2 n'a bien entendu pas de fonction, et une simple ouverture de passage est prévue à ce niveau dans la plaque.

Durant toute l'opération, les rebords des plaques en forme de boîtiers assurent un guidage parfait de l'ensemble, ceci sans recours à des organes de guidage extérieurs.

Pour procéder à la déconnexion simultanée de l'ensemble des raccords, il suffit d'opérer en sens inverse, en relevant le levier 9, ce qui provoque successivement le déverrouillage des manchons, le désemboîtement des parties mâles et femelles et le retour du manchon à sa position de verrouillage. Bien entendu, au moment de la déconnexion, les clapets 50, 70 se mettent automatiquement en position d'obturation, évitant les fuites de fluide.

Lors de la déconnexion, c'est la piste 44b qui agit sur le galet 30. Il y a donc un actionnement positif du mécanisme dans le sens de la déconnexion qui, s'ajoutant au bon guidage relatif des différentes plaques, évite pratiquement toute difficulté de manoeuvre qui serait due à un coincement, ce qui n'est probablement pas le cas dans le dispositif selon DE-A-2 011 361.

En raison de la démultiplication créée par le levier de manoeuvre 9 et par la forme des pistes de cames, la force nécessaire à la connexion et à la déconnexion de l'ensemble est relativement faible, même s'il existe dans les conduites des pressions résiduelles relativement importantes, pouvant dépasser 100 bars.

L'ensemble des connexions se fait avec une grande rapidité, sans possibilité d'erreurs. Elle se fait par ailleurs dans des conditions idéales de guidage ce qui permet d'accroître la longévité des joints. Si la connexion n'est pas faite de manière parfaite, il n'est pas possible de verrouiller le système.

On notera également que l'ensemble des organes de connexion sont maintenus à l'abri des impuretés, lesquelles ne peuvent donc pas pénétrer dans les organes connecteurs.

Ceci est particulièrement important pour des engins du genre tracteurs agricoles qui se déplacent constamment dans une atmosphère chargée de poussière. Inversement, les fuites éventuelles d'huile se trouvent recueillies dans le boîtier inférieur et retenues dans celui-ci ; elles ne peuvent donc pas souiller le milieu extérieur ni - en cas de projections - blesser l'utilisateur. Il est du reste possible de prévoir dans le boîtier inférieur un drain récupérant le liquide qui a fui pour éventuellement le recycler par retour au réservoir.

Lors d'un déplacement sur la route du tracteur, équipé de son chargeur, il est simple de déconnecter d'une seule manoeuvre du levier l'ensemble des liaisons hydrauliques, ceci sans enlever l'ensemble 1, 2 qui reste posé sur la plaque 3. On évite ainsi tout risque de chute de matières ou de l'outil par fausse manoeuvre sur les manettes de commande.

Pour circuler, l'outil est déconnecté, soulevé du sol. Le poids de l'outil ne génère pas de pression supérieure à celle sous laquelle le système peut être connecté ; la reconnexion après déplacement se fait alors par simple abaissement du levier.

Le boîtier inférieur 3 est avantageusement muni d'un couvercle pivotant (non représenté) à fermeture automatique commandée par ressort. Un tel couvercle est adapté pour fermer hermétiquement ce boîtier lorsque la partie 1-2 est enlevée et aussi protéger l'ensemble des organes de connexion mâles lorsque le chargeur n'est pas monté sur le tracteur.

Au droit de la zone d'articulation du couvercle sur le boîtier inférieur, le boîtier supérieur 1 possède dans ce cas un rebord échancré de sorte que ce rebord ne contrarie pas la mise en place du boîtier 1 sur le boîtier 3, lorsque le couvercle est relevé.

Dans la variante de came 4′ représentée à la figure 6a, la partie de came actionnant les manchons de verrouillage affecte la forme d'une rainure fermée ; à la piste 41-42-43 est associée une piste "retour" 420. L'extrémité 421 de cette piste est destinée à garantir le verrouillage, par déplacement forcé des manchons 5, même en cas de défaillance des ressorts 62 (blocage ou absence de ceux-ci).

Lors du passage des galets 20 dans les gorges 43, il se produit un enclenchement net, ressenti par l'utilisateur, tandis que le levier de commande 9 se met en position parfaitement verticale, de sorte que l'utilisateur soit assuré du parfait verrouillage. Après verrouillage, chaque organe de connexion mâle est verrouillé à l'organe femelle par les billes du manchon associé ; les efforts dûs à la pression hydraulique sont circonscrits dans chaque couple mâle/femelle, et ne sont transmis ni aux pistes ni aux boîtiers.

Le dispositif est donc particulièrement fiable et robuste.

L'invention trouve des applications dans divers autres domaines.

A titre d'exemples on citera :
- le raccordement des circuits hydrauliques d'une remorque avec le tracteur dans un ensemble routier du type semi-remorque ;
- la connexion d'un poste de soudage à différentes sources de distribution de gaz (oxygène et acétylène... ) et de liquide (eau de refroidissement... ) ;
- le raccordement d'un outillage de fabrication comportant des vérins à une centrale hydraulique.

Les dimensions du connecteur multiple, et le nombre d'éléments de raccord, seront naturellement choisis en fonction de l'application envisagée.

## Revendications

1. Connecteur fluidique multiple, du type comprenant une pluralité d'organes de connexion femelles (5), de forme générale tubulaire, aptes à être emboîtés chacun de manière étanche sur un organe de connexion mâle complémentaire (7), également de forme générale tubulaire, chaque organe femelle portant un manchon de verrouillage coaxial coulissant (6), l'ensemble desdits organes de connexion femelles (5), desdits manchons de verrouillage (6) et desdits organes de connexion mâles (7) étant montés, en des emplacements coïncidents, respectivement sur une première plaque (1), une seconde plaque (2) et une troisième plaque (3), de telle façon que l'axe de chaque organe de connexion et de chaque manchon se trouve disposé perpendiculairement à la plaque sur laquelle il est monté, ces trois plaques pouvant être superposées en vue de la connexion fluidique simultanée de chaque organe mâle (7) avec l'organe femelle associé (5), et lesdites première et troisième plaques (1,3) possèdant des bords rabattus, ce connecteur comportant un dispositif à came (4), à commande manuelle, adapté pour réaliser séquentiellement, d'une part le déplacement relatif desdites première et seconde plaques (1, 2) afin d'actionner lesdits manchons de verrouillage (6), d'autre part le déplacement relatif desdits première et troisième plaque (1, 3) afin de provoquer l'emboîtement ou le désemboîtement desdits organes de connexion mâles et femelle (7, 5), caractérisé par le fait que tous les bords desdites première et troisième plaques (1, 3) sont rabattus à angle droit (11-11′ ; 31-31′) donnant ainsi aux plaques la forme de boîtiers emboîtables l'un dans l'autre, de manière à assurer leur guidage mutuel au cours de leur engagement et déplacement relatifs, et à isoler du milieu extérieur l'ensemble des organes de connexion (5, 7).

2. Connecteur fluidique multiple selon la revendication 1, caractérisé en ce que lesdites première et seconde plaques (1, 2) sont solidaires l'une de l'autre et constituent un ensemble séparable de ladite troisième plaque (3), ledit dispositif à came (4) comportant des moyens (440-30) permettant leur engagement mutuel en vue de la connexion

3. Connecteur fluidique multiple selon la revendication 2, caractérisé en ce que ladite troisième plaque (3) en forme de boîtier est munie d'un couvercle à fermeture automatique adapté pour fermer hermétiquement ce boîtier lorsque l'ensemble (1, 2) est enlevé.

4. Connecteur fluidique multiple selon l'une des revendications 1 à 3, caractérisé en ce que lesdites plaques (1, 2, 3) ont un contour sensiblement rectangulaire, tandis que ledit dispositif à came comprend une paire de cames plates identiques et parallèles, disposées perpendiculairement par rapport à ladite première plaque (1) et articulées sur des tourillons coaxiaux (10) montés sur deux bords opposés de cette première plaque (1), ces deux cames (4) étant reliées par une tige de liaison (8) et actionnées par un organe de manoeuvre commun tel qu'un levier démultiplicateur (9).

5. Connecteur fluidique multiple selon la revendication 4, caractérisé en ce que chacune desdites cames (4) est pourvue d'une première piste (42) coopérant avec un premier organe suiveur (20), tel qu'un galet, cette piste (42) présentant une portion principale de contour en arc de cercle, centrée sur ledit tourillon (10), et deux gorges d'extrémité semi-cylindriques (41, 43) aptes à recevoir ledit organe suiveur (20), la distance séparant le fond de ces gorges du centre du tourillon (10) étant plus faible que le rayon de ladite portion en arc de cercle, la différence entre ces deux longueurs correspondant sensiblement à la course de verrouillage - déverrouillage du manchon coulissant (6).

6. Connecteur fluidique multiple selon la revendication 5, caractérisé en ce que à ladite première piste (42) est associée une piste "retour" (420) dont une extrémité (421) est destinée à garantir le verrouillage, par enclenchement forcé du galet (20) dans la gorge d'extrémité correspondante (43).

7. Connecteur fluidique multiple selon l'une des revendications 4 à 6, caractérisé en ce que chacune desdites cames (4) est pourvue d'une rainure (44) apte à recevoir un second organe suiveur (30), tel qu'un galet, cette rainure ayant une forme en arc de spirale, centrée sur ledit tourillon (10), et débouchant à l'extérieur par un ouverture (440) autorisant le passage dudit organe suiveur (30), l'un (44a) des bords de cette rainure servant à rapprocher l'une de l'autre lesdites première et troisième plaque (1, 3) en vue de leur connexion, et l'autre (44b) à les écarter en vue de leur déconnexion

8. Connecteur fluidique multiple selon l'une des revendications 1 à 7, caractérisé en ce qu'il est pourvu d'au moins un jeu d'organes de connexion additionnels non fluidiques, par exemple électriques (5′, 7′), portés par lesdites première et troisième plaques (1, 3).

9. Connecteur fluidique multiple selon l'une des revendications 1 à 8, caractérisé en ce qu'il est destiné à assurer la connexion hydraulique entre un tracteur agricole et un dispositif chargeur à commande hydraulique.

## Patentansprüche

1. Fluidischer Mehrfachverbinder des Typs, der mehrere weibliche Verbindungselemente (5) röhrenförmiger Grundform enthält, die geeignet sind, auf dichte Weise jeweils mit einem komplementären männlichen Verbindungselement (7) ebenfalls röhrenförmiger Grundform zusammengesteckt zu werden, wobei jedes weibliche Element eine koaxiale verschiebliche Verriegelungshülse (6) trägt, die Gruppe der weiblichen Verbindungselemente (5), der Verriegelungshülsen (6) und der männlichen Verbindungselemente (8) auf einer ersten Platte (1), einer zweiten Platte (2) beziehungsweise einer dritten Platte (3) an übereinstimmenden Plätzen derart angebracht sind, daß die Achse jedes Verbindungselements und jeder Hülse senkrecht zu der Platte angeordnet ist, auf der sie montiert sind, diese drei Platten zum Zweck der simultanen fluidischen Verbindung eines jeden männlichen Elements (7) mit dem zugeordneten weiblichen Element (5) aufeinandergesetzt werden können und die erste und die dritte Platte (1, 3) umgeschlagene Seiten besitzen, dieser Verbinder eine Nockenvorrichtung (4) mit manueller Betätigung besitzt, die dazu angepafft ist, nacheinander einerseits die relative Verschiebung der ersten und der zweiten Platte (1, 2) auszuführen, um die Verriegelungshülsen (6) zu betätigen, andererseits die relative Verschiebung der ersten und der dritten Platte (1, 3) auszuführen, um das Zusammenstecken oder das Voneinanderlösen der männlichen und weiblichen Verbindungselemente (7, 5) zu bewirken, dadurch gekennzeichnet, daß alle Seiten der ersten und der dritten Platte (1, 3) rechtwinklig (11-11′; 31-31′) umgeschlagen sind und so den Platten die Gestalt von ineinander einsetzbaren Kästen geben, um damit ihre gegenseitige Führung im Verlauf des Ineinandersetzens und der Verschiebung gegeneinander sicherzustellen und die Gesamtheit der Verbindungselemente (5, 7) von der äußeren Umwelt zu isolieren.

2. Fluidischer Mehrfachverbinder gemäß Anspruch 1, dadurch gekennzeichnet, daß die erste und die zweite Platte (1, 2) miteinander verbunden sind und eine von der dritten Platte (3) trennbare Einheit bilden, wobei die Nockenvorrichtung (4) Einrichtungen (440-30) enthält, die ihr Ineinandereinsetzen zum Zweck der Verbindung gestatten.

3. Fluidischer Mehrfachverbinder gemäß Anspruch 2, dadurch gekennzeichnet, daß die dritte Platte (3) in Gestalt eines Kastens mit einem automatisch schließenden Deckel versehen ist, der dazu angepafft ist, diesen Kasten hermetisch zu schließen, wenn die Einheit (1, 2) angehoben wird.

4. Fluidischer Mehrfachverbinder gemäß einem der Ansprüche 1 bis 3, dadurch gekennzeichnet, daß die Platten (1, 2, 3) einen in etwa rechtwinkligen Grundriß haben, während die Nockenvorrichtung ein Paar von flachen, identischen und parallelen Nocken enthält, die senkrecht zu der ersten Platte (1) angeordnet sind und die auf koaxialen, an zwei gegenüberliegenden Seiten der ersten Platte (1) montierten Lagerzapfen (10) drehbar gelagert sind, wobei die beiden Nocken (4) miteinander über eine Verbindungsstange (8) verbunden sind und durch ein gemeinsames Betätigungselement wie etwa einen Untersetzungshebel (9) angetrieben werden.

5. Fluidischer Mehrfachverbinder gemäß Anspruch 4, dadurch gekennzeichnet, daß jede der Nocken (4) mit einer ersten Bahn (42) versehen ist, die mit einem ersten Mitläuferelement (20) wie etwa einer Rolle zusammenwirkt, wobei diese Bahn (42) einen Hauptteil vom Grundriß eines Kreisbogens, der auf dem Lagerzapfen (10) zentriert ist, und zwei halbzylindrische Endvertiefungen (41, 43), die geeignet sind, das Mitläuferelement (20) aufzunehmen, aufweist, wobei der Abstand zwischen der tiefsten Stelle dieser Vertiefungen und dem Mittelpunkt des Lagerzapfens (10) kleiner ist als der Radius des besagten kreisbogenförmigen Stücks und der Unterschied zwischen diesen beiden Längen in etwa dem Weg Verriegelung-Entriegelung der verschieblichen Hülse (6) entspricht.

6. Fluidischer Mehrfachverbinder gemäß Anspruch 5, dadurch gekennzeichnet, daß der ersten Bahn (42) eine "Rückwärts"-Bahn (420) zugeordnet ist, deren eines Ende (421) dazu bestimmt ist, die Verriegelung durch erzwungenes Einrasten der Rolle (20) in die entsprechende Endvertiefung (43) sicherzustellen.

7. Fluidischer Mehrfachverbinder gemäß einem der Ansprüche 4 bis 6, dadurch gekennzeichnet, daß jede der Nocken (4) mit einem Schlitz (44) versehen ist, der dazu geeignet ist, ein zweites Mitläuferelement (30) wie etwa eine Rolle aufzunehmen, wobei dieser Schlitz die Form eines Spiralbogens hat, der auf dem Lagerzapfen (10) zentriert ist, und nach außen in einer Öffnung (440) mündet, die den Durchtritt des Mitläuferelements (30) erlaubt, wobei der eine Rand (44a) dieses Schlitzes dazu dient, die erste und die dritte Platte (1, 3) zum Zweck ihrer Verbindung einander zu nähern, und der andere (44b), sie zum Zweck ihrer Lösung voneinander zu entfernen.

8. Fluidischer Mehrfachverbinder gemäß einem der Ansprüche 1 bis 7, dadurch gekennzeichnet, daß er mit wenigstens einem Satz von zusätzlichen, nicht fluidischen, z.B. elektrischen Verbindungselementen (5′, 7′) versehen ist, die durch die erste und die dritte Platte getragen werden.

9. Fluidischer Mehrfachverbinder gemäß einem der Ansprüche 1 bis 8, dadurch gekennzeichnet, daß er dazu bestimmt ist, die hydraulische Verbindung zwischen einer landwirtschaftlichen Zugmaschine und einer hydraulisch gesteuerten Ladevorrichtung sicherzustellen.

## Claims

1. Multiple fluid connector, of the type comprising a plurality of female connection members (5), of a general tubular shape, suitable to be fitted in sealed manner each onto a complementary male connection member (7), also of general tubular shape, each female member bearing a coaxial sliding locking sleeve (6), the whole of the said female connection members (5), of the said locking sleeves (6) and of the said male connection members (7) being mounted, in coincident locations, respectively on a first plate (1), a second plate (2) and a third plate (3), such that the axis of each connection member and of each sleeve is arranged perpendicularly with respect to the plate on which it is mounted, it being possible for these three plates to be placed one on top of the other in order to enable the simultaneous fluid connection of each male member (7) with the associated female member (5), and the said first and third plates (1, 3) having folded edges, said connector having a cam arrangement (4) which is manually controlled and adapted to effect sequentially on the one hand the relative displacement of the said first and second plates (1, 2) in order to actuate the said locking sleeves (6), and on the other hand to effect the relative displacement of the said first and third plates (1, 3) in order to bring about the coupling or uncoupling of the said male and female connection members (7, 5), characterized in that all the edges of the said first and third plates (1, 3) are folded at a right angle (11-11′; 31-31′), thus giving the plates the shape of casings which can be fitted one into the other, so as to ensure their mutual guidance during their relative engagement and displacement, and so as to insulate the whole of the connection members (5, 7) from the external environment.

2. Multiple fluid connector according to Claim 1, characterized in that the said first and second plates (1, 2) are integral with one another and form a unit which is separable from the said third plate (3), the said cam arrangement (4) having means (440-30) enabling their mutual engagement to order to connect them.

3. Multiple fluid connector according to Claim 2, characterized in that the said third plate (3) in the shape of a casing is equipped with a cover which closes automatically and which is adapted to close said casing hermetically when the unit (1, 2) is removed.

4. Multiple fluid connector according to one of Claims 1 to 3, characterized in that the said plates (1, 2, 3) have a substantially rectangular contour, whilst the said cam arrangement comprises a pair of identical and parallel flat cams which are arranged perpendicularly with respect to the said first plate (1) and are articulated on coaxial journals (10) mounted on the two opposing edges of said first plate (1), these two cams (4) being connected by a connection rod (8) and actuated by a common operating member such as a reducing gear lever (9).

5. Multiple fluid connector according to Claim 4, characterized in that each of the said cams (4) is provided with a first track (42) which cooperates with a first follower member (20), such as a roller, said track (42) having a main contour portion in the shape of the arc of a circle and centred on the said journal (10), and two semi-cylindrical end grooves (41, 43) which are suitable for receiving the said follower member (20), the distance separating the base of said grooves from the centre of the journal (10) being smaller than the radius of the said portion having the shape of an arc of a circle, the difference between these two lengths substantially corresponding to the locking/unlocking stroke of the sliding sleeve (6).

6. Multiple fluid connector according to Claim 5, characterized in that there is associated with the said first track (42) a "return" track (420) whereof one end (421) is intended to ensure locking by forcing the roller (20) to engage into the corresponding end groove (43).

7. Multiple fluid connector according to one of Claims 4 to 6, characterized in that each of the said cams (4) is provided with a notch (44) which is suitable to receive a second follower member (30), such as a roller, said notch having the shape of an arc of a spiral which is centred on the said journal (10) and opens into the outside by way of an opening (440) allowing the passage of the said follower member (30), one (44a) of the edges of this notch serving to bring closer the said first and third plates (1, 3) in order to connect them, and the other (44b) serving to move them apart in order to disconnect them.

8. Multiple fluid connector according to one of Claims 1 to 7, characterized in that it is provided with at least one set of non-fluid, for example electric (5′, 7′), additional connection members which are borne by the said first and third plates (1, 3).

9. Multiple fluid connector according to one of Claims 1 to 8, characterized in that it is intended to ensure the hydraulic connection between an agricultural tractor and a hydraulic drive loading device.
